Europäisches Patentamt

(19) European Patent Office

Office européen des brevets

(11) Publication number: **0 217 261**
**B1**

(12) **EUROPEAN PATENT SPECIFICATION**

(45) Date of publication of patent specification: **06.02.91**

(21) Application number: **86113040.9**

(22) Date of filing: **22.09.86**

(51) Int. Cl.⁵: **B 60 G 3/20**

(54) **Unit for elastically suspending the wheels of a motor vehicle from the vehicle body.**

(30) Priority: **27.09.85 IT 6782785**

(43) Date of publication of application:
**08.04.87 Bulletin 87/15**

(45) Publication of the grant of the patent:
**06.02.91 Bulletin 91/06**

(84) Designated Contracting States:
**DE FR GB SE**

(56) References cited:
**FR-A- 620 485**
**FR-A- 690 227**
**FR-A-2 156 290**
**GB-A-1 255 094**
**GB-A-1 290 804**
**GB-A-1 466 060**
**US-A-2 751 992**

**AUTOCAR, vol. 250, no. 3528, 27th September 1963, page 567: "Vauxhall Viva"**

(73) Proprietor: **FIAT AUTO S.p.A.**
**Corso Giovanni Agnelli 200**
**I-10135 Torino (IT)**

(72) Inventor: **Messina, Carmelo**
**Corso Inghilterra, 31**
**I-10100 Torino (IT)**

(74) Representative: **Prato, Roberto et al**
**STUDIO TORTA Società Semplice Via Viotti 9**
**I-10121 Torino (IT)**

Courier Press, Leamington Spa, England.

# Description

This invention relates to a unit for elastically suspending a pair of wheels of a motor vehicle from a vehicle body, comprising: a cross-member formed of a central element secured to a pair of lateral elements projecting from said central element substantially outwards and upwards; an upper and lower rocker arm associated with each of said lateral elements, one end of each upper and lower rocker arm being hinged to the upper and lower end of each lateral element respectively; a pair of uprights each secured to a corresponding wheel journal and connected to the other end of each upper and lower rocker arm by a ball joint; elastically deformable means and damping means interposed between at least one rocker arm of each pair of upper and lower arms and said cross-member, said lateral elements being directly fixed to said vehicle body, and said uprights comprising mounting means which are arranged for connecting said uprights mutually by means of a steering linkage.

A suspension unit of the above type is known from the GB—A—1 290 840, which is provided as an integrated unit to be assembled to the vehicle front end. In this suspension unit the pair of lateral elements of the cross-member are welded to a pair of longitudinal frame members of channel shape to fit with the frame rails of the vehicle chassis. The frame members support an anti-roll stabilizer bar, a steering linkage and a hydraulic booster assembly including a hydraulic pump for operating the steering gears and the front wheel brakes.

This known suspension unit has several drawbacks. Firstly, it is lengthy and complicated to assemble, both because of the large number of parts and the inclusion in the unit of several additional devices. In addition, this known suspension is specific for supporting the front steered wheels, whereby the rear suspension unit must have completely different structure and components. Therefore the cost of the suspension units is increased because of the poor standardisation thereof.

It is also known from the GB—A—1 255 094 a motor vehicle with hydrostatic power transmission, wherein the front and rear suspension systems are identical. However in these suspension systems the suspension arms are mounted on bearing assemblies carried by a hollow structure. The wheels are driven individually by associated hydraulic wheel-motors driven by pressurized oil, which is delivered by an engine driven pump, through ducts contained in the suspension arms, whereby said suspension systems are unreliable and intricate to manufacture.

The technical problem to be solved by the invention resides in providing a suspension unit for a vehicle body, which obviates all the above drawbacks and can be preassembled as a separate unit identical for both the front and rear pairs of wheels.

This problem is solved by the unit for elastically suspending a pair of wheels of a motor vehicle from the vehicle body of the above type, which is characterised in that said mounting means are also arranged so as to be able to connect each one of said uprights individually to another mounting means on each of said lateral elements by means of an associated tie rod so as to allow the connected upright to move only in a vertical plane, whereby the unit can be mounted on the vehicle body as suspension of either the pair of steered front wheels or the pair of rear wheels.

The present invention will be more apparent from the detailed description thereof given hereinafter by way of example with reference to the accompanying drawings, in which:

Figure 1 is a perspective view of a pair of units according to the invention for elastically suspending motor vehicle, and to be used for suspending the steered front wheels and the rear wheels of a motor vehicle respectively;

Figure 2 is a perspective view of some of the elements of the unit according to the invention;

Figure 3 is a perspective view of part of a vehicle body on which a pair of units according to the invention has been mounted for suspending the steered front wheels and the rear wheels of the motor vehicle.

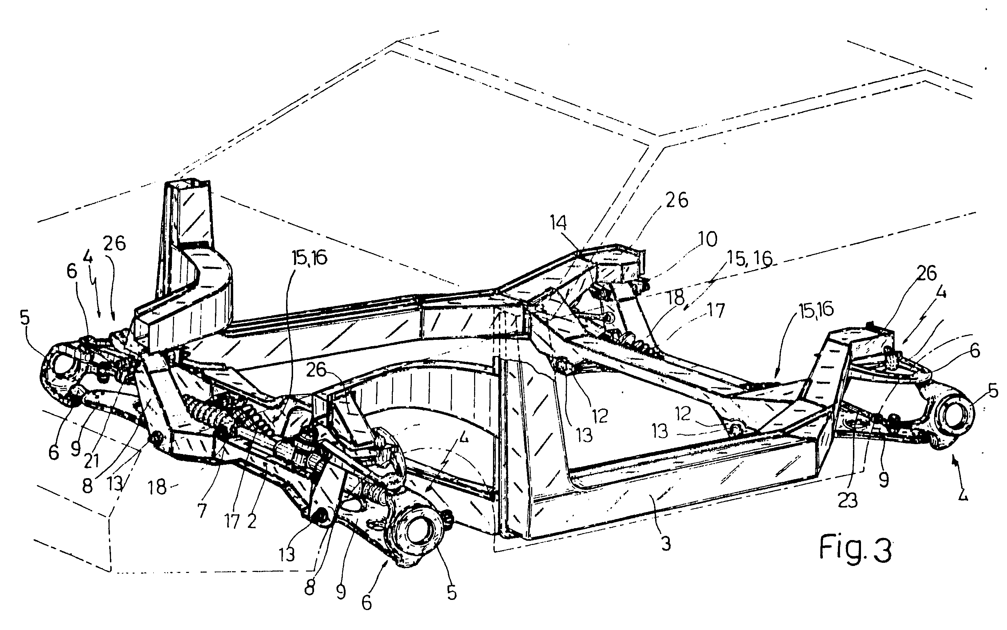

The unit of the invention, indicated overall by 1, comprises substantially a cross-member 2 to be fixed to the vehicle body 3 (Figure 3), two pairs of rocker arms 4 each of which has one end hinged to one end of the cross-member 2, and a pair of uprights 5 each of which is rigid with the journal (not shown) of a wheel of the motor vehicle, and is connected by a ball joint 6 to the other end of the rocker arms of one pair.

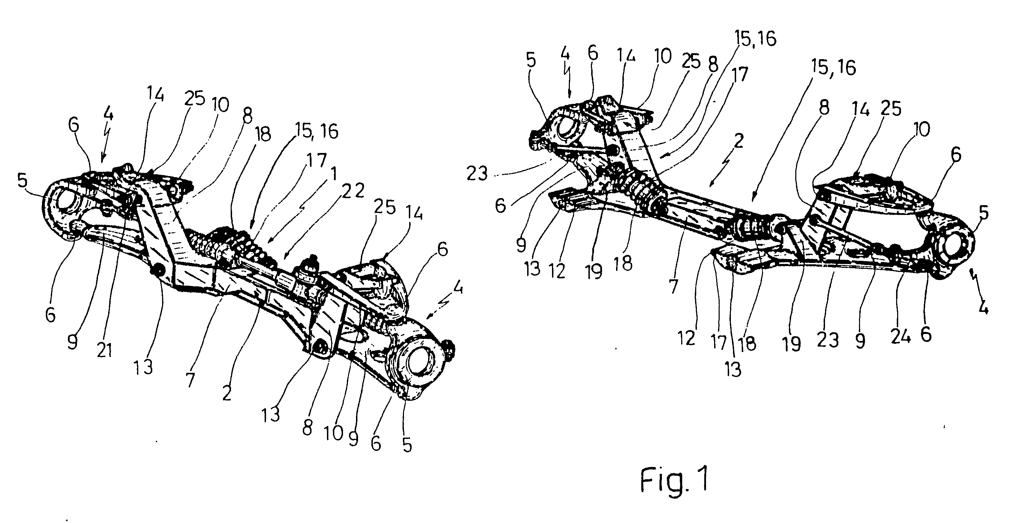

The cross-member 2 is provided with a central element 7 and two lateral elements 8, each of which projects upwards from the central element to form with the axis of this latter an angle of less than 90°. Each pair of rocker arms 4 comprises a lower arm 9 and an upper arm 10, the first of which is connected by a hinge 13 to one end of a corresponding lateral element 8 and the second of which is connected by another hinge 14 to the other end of the same lateral element. Each hinge 13 can be conveniently provided in a support 12 fixed to the central element 7 as can be seen in the unit to the right of Figure 1.

The unit also comprises elastically deformable means and damping means indicated overall respectively by 15 and 16, they being interposed between at least one of said rocker arms of each pair and the cross-member 2, and being arranged respectively to deform elastically under the loads applied to said arm and to damp the rocking motion of this latter.

The elastically deformable means 15 can comprise a spiral spring, a torsion bar, a leaf spring or any other elastic element. The elastically deformable means and the damping means provided in the embodiment shown in the figures are constituted by a system comprising substantially a spiral spring 17 and a shock absorber 18 coaxial to the spring and disposed within it. One end of said system is hinged to a lug 19 of one of the lower rocker arms 9, and the other is hinged to the central element 7 of the cross-member 2. This system is conveniently disposed such that its axis forms an angle substantially of 45° to the axis of the cross-member, as shown in the figures.

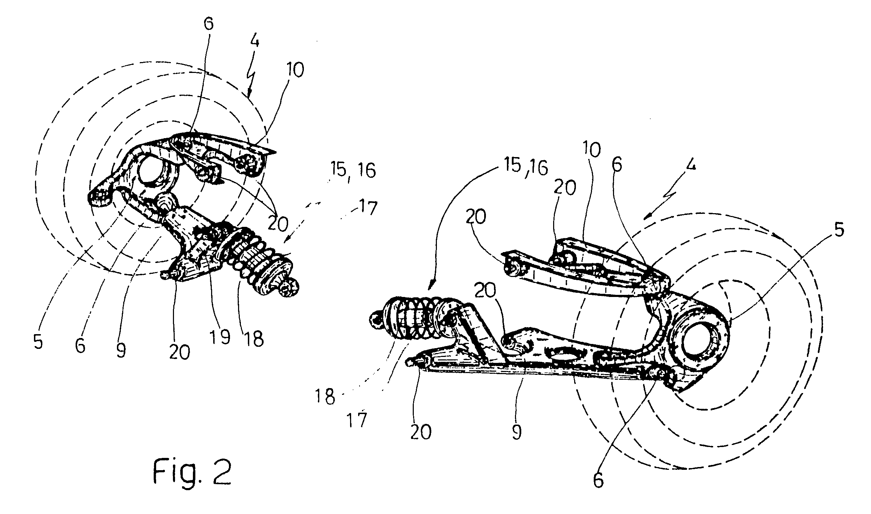

The hinges 13 and 14 for connecting the rocker arms 9 and 10 of each pair to the cross-member 2 can be formed in any convenient manner: each arm can comprise a pair of bushes or pivots 20 (Figure 2) arranged to form part of said hinges; between each bush-pivot pair there can be interposed a sleeve of elastically deformable material of elastomer type, vulcanised or connected in any manner to the surfaces of said bush and pivot. The unit according to the invention can be arranged to form the suspension for the steered front wheels or for the rear wheels of the vehicle. In the first case, represented by the unit shown to the left in Figure 1, to an appendix 24 of each upright 5 is hinged the end of a rod 21 forming part of the steering linkage, indicated overall by 22. In the second case, each upright 5 is further connected to the corresponding lateral element 8 of the cross-member 2 by a rod 23, the ends of which are hinged one to a hinge element carried by the lateral element 8 itself and the other to the appendix 24 of the upright 5. The further said connection consequently compels the upright 5 to remain substantially always in the same vertical plane.

The unit according to the invention is also provided with means for its connection to the motor vehicle body. These can consist conveniently of suitable support seats 25 formed on the upper end of each lateral element 8 of the cross-member 2. In Figure 3 a pair of units is shown mounted on a motor vehicle body 3, which can be of any structure and comprise for example a plurality of side-members and crossmembers connected together. Each unit is connected to the vehicle body by resting the unit seats 25 on suitable body supports 26. Conveniently, instead of being fixed directly to the body in the aforesaid manner, each unit can be connected to it by way of elastic elements of any type.

The use and operational behaviour of the unit according to the invention are as follows.

Completely assembled units can be prepared separately from the vehicle bodies on which they are to be mounted, and if necessary suitably stored. In the assembly of each unit, all the described component parts and members of the unit are connected to the cross-member 2. In particular, if the uprights 5 are not connected to the rod 23 or to the rods 21 of the steering linkage 22 during unit assembly, the unit can be used to form either the vehicle steered front wheel suspension or the rear wheel suspension. In such a case, these latter members are mounted on the unit just before its fixing to the vehicle body. Those members are devices which are normally fixed to the uprights 5, such as the braking system and the braking adjustment device, can also be mounted on the unit.

It is therefore apparent that the unit can be assembled with extreme ease and rapidity because of the accessibility of those regions of the cross-member to which the various parts and members of the unit are to be connected, and because of the considerable manageability of the unit. In addition, when assembly is complete, the normal adjustment operations such as setting the convergence, the characteristic suspension angles and the braking system, can be effected with considerable precision.

The completely finished unit is mounted on the vehicle body by resting the seats 25 of the cross-member 2 on the corresponding body supports 26, and connecting these parts together in any convenient manner. As stated, further elastic members can be disposed between the unit and body.

When an external load is applied to a wheel, it is transferred to the corresponding upright 5 to cause the rocker arms 4 to rock in such a direction as to elastically deform the spiral spring 17. As the rocker arms 4 are hinged to the cross-member 2 and the ends of the spiral spring 17 are hinged one to the cross-member itself and the other to the lug 19 of the lower rocker arm 9, the external forces acting on each upright 5 are balanced only by the reactions which act at the various hinging points of the said members. The result is that instead of concentrated forces, only a system consisting of two reactions at the body supports 26 is transmitted to the vehicle body 3. Consequently, the body can be constructed with a simple low-weight structure, as each unit comprises structural elements able to effectively react to the external forces applied to the vehicle wheels.

It is apparent that modifications can be made to the form and arrangement of the various parts of the unit according to the invention but without leaving the scope of the appended claims. In particular, elastically deformable means different from those described could be used, and thus the spiral spring 17 could be replaced by leaf springs, torsion bars or springs of other type. Moreover, the articulated quadrilateral formed from the pair of rocker arms 4 could comprise, as a replacement for one of these, a leaf spring fixed rigidly to the cross-member 2.

**Claims**

1. A unit for elastically suspending a pair of wheels of a motor vehicle from a vehicle body, comprising:
   a cross-member (2) formed of a central element (7) secured to a pair of lateral elements (8) projecting from said central element substantially outwards and upwards; an upper and lower rocker arm (9, 10) associated with each of said lateral elements, one end of each upper and lower rocker arm (9, 10) being hinged to the upper and lower end of each lateral element (8) respectively; a pair of uprights (5) each secured to a corresponding wheel journal and connected to the other end of each upper and lower rocker arm by a ball joint (6); elastically deformable means (15) and damping means (16) interposed between at least one rocker arm (9) of each pair of upper and lower arms and said cross-member, said lateral elements (8) being directly fixed to said vehicle body (3), and said uprights (5) comprising mounting means (24) which are arranged for connecting said uprights mutually by means of a steering linkage (22), characterised in that said mounting means (24) are also arranged so as to be able to connect each one of said uprights (5) individually to another mounting means on each of said lateral elements (8) by means of an associated tie rod (23) so as to allow the connected upright (5) to move only in a vertical plane, whereby the unit can be mounted on the vehicle body as suspension of either the pair of steered front wheels or the pair of rear wheels.

2. A unit as claimed in claim 1, characterised in that said mounting means comprised in said uprights (5) include a first mounting element (24) provided on each one of said uprights and arranged for being connected mutually by said steering linkage (22), said other mounting means including a hinge element provided on each one of said lateral elements (8) arranged for being connected to said first element (24) of the associated upright (5) by said associated tie rod (23).

3. A unit as claimed in claim 1 or 2, characterised in that the rocker arms (9, 10) of each couple are hinged to said opposite ends of the associated lateral element (8) by hinges (13, 14) each one comprising a pair of bushes (20) and a sleeve of elastically deformable material of elastomer type connected to the surfaces of said bushes.

4. A unit as claimed in any previous claim, characterised in that said elastically deformable means (15) and damping means (16) comprise a lug (19) projecting from one (9) of the rocker arms (9, 10) of each couple, and a system (17, 18) including a spiral spring (17) and a shock absorber (18) coaxial to said spring and located within said spiral spring, one end of said system being hinged to said lug, the other end of said system being hinged to the central element (7) of said cross-member (2), said lug (19) being so shaped and sized that the axis of said system forms an angle substantially of 45° with the axis of said central element.

**Patentansprüche**

1. Einheit zum elastischen Aufhängen eines Räderpaares eines Kraftfahrzeugs an einem Fahrzeugaufbau, mit einem Querträger (2), welcher aus einem Mittelelement (7), das an einem Paar von vom Mittelelement im wesentlichen nach außen und oben abragenden seitlichen Elementen (8) angebracht ist, gebildet ist; einem oberen und unteren Schwingarm (9, 10) in Zuordnung zu jedem der seitlichen Elemente, wobei jeweils ein Ende eines oberen und unteren Schwingarms (9, 10) am oberen bzw. unteren Ende eines jeden seitlichen Elements (8) angelenkt ist; einem Paar von Ständern (5), von denen jeder an einem entsprechenden Radachszapfen angebracht und mit dem anderen Ende des jeweiligen oberen und unteren Schwingarms mittels eines Kugelgelenks (6) verbunden ist; elastisch verformbaren Mltteln (15) und Dämpfungsmittel (16) zwischen wenigstens einem Schwingarm (9) eines jeden Paares von oberem und unterem Arm und dem Querträger, wobei die seitlichen Elemente (8) direkt am Fahrzeugaufbau (3) befestigt sind, und die Ständer (5) Anbringungsmittel (24) umfassen, die für ein wechselseitiges Verbinden der Ständer mittels eines Lenkgestänges (22) eingerichter sind, dadurch gekennzeichnet, daß die anbringungsmittel (24) auch so eingerichtet sind, daß sie in der Lage sind, jeden der Ständer (5) einzeln mit weiteren Anbringungsmitteln auf jedem der seitlichen Elemente (8) mittels einer zugeordneten Spurstange (23) zu verbinden, so daß sich der verbundene Ständer (5) nur in einer vertikalen Ebene bewegen kann, wodurch die Einheit an dem Fahrzeugaufbau als Aufhängung entweder des Paares gelenkter Vorderräder oder des Paares hinterer Räder angebracht werden kann.

2. Einheit nach Anspruch 1, dadurch gekennzeichnet, daß die in den Ständern (5) vorhandenen Anbringungsmittel ein erstes Anbringungselement (24) enthalten, welches auf jedem der Ständer vorgesehen und für ein wechselseitiges Verbinden durch das Lenkgestänge (22) eingerichtet ist, wobei die weiteren Anbringungsmittel ein auf jedem der seitlichen Elemente (8) vorgesehenes Gelenkelement zur Verbindung mit dem ersten Element (24) des zugehörigen Ständers (5) durch die zugehörige Spurstange (23) enthält.

3. Einheit nach Anspruch 1 oder 2, dadurch gekennzeichnet, daß die Schwingarme (9, 10) eines jeden Paares an den entgegengesetzten Enden des zugehörigen seitlichen Elements (8) durch Gelenke (13, 14) angelenkt sind, von denen jedes ein Paar von Büchsen (20) und eine mit den Oberflächen der Büchsen verbundene Muffe aus elastisch verformbarem Material des Elastomertyps umfaßt.

4. Einheit nach irgendeinem vorstehenden Anspruch, dadurch gekennzeichnet, daß die elastisch verformbaren Mittel (15) und Dämpfungsmittel (16) einen von einem (9) der Schwingarme (9, 10) eines jeden Paars abragenden Ansatz (19) und ein System (17, 18) mit einer Spiralfeder (17) und einem zur Feder koaxialen und in der Spiralfeder angeordneten Stoßdämpfer (18) umfassen, wobei ein Ende des Systems an dem Ansatz angelenkt ist, das andere Ende des Systems am Mittelelement (7) des Querträgers (2) angelenkt ist, wobei der Ansatz (19) so geformt ist und solche Abmessungen hat, daß die Achse des Systems im wesentlichen einen Winkel von 45° mit der Achse des Mittelelements bildet.

## Revendications

1. Ensemble pour suspendre élastiquement une paire de roues d'un véhicule à moteur sur une carrosserie de véhicule, comprenant:

une traverse (2) formée par un élément central (7) fixé à deux élémemts latéraux (8) se projetant de cet élément central pratiquement vers l'extérieur et vers le haut; un bras oscillant supérieur (10) et un bras oscillant inférieur (9) associés à chacun des éléments latéraux, une extrémité de chaque bras oscillant supérieure et inférieur (10, 9) étant articulé sur l'extrémité supérieure et sur l'extrémité inférieure de chaque élément latéral (8) respectivement, deux supports de fusée (5), fixés chacun sur une fusée de roue correspondante et reliés à l'autre extrémité de chaque bras oscillant supérieur et inférieur par un joint à rotule (6); des moyens élastiquement déformables (15) de des moyens d'amortissement (16) interposés entre au moins un bras oscillant (9) de chaque paire de bras supérieur et inférieur et la traverse, les éléments latéraux (8) étant directement fixés sur la carrosserie du véhicule (3), les supports (5) comportant des moyens de montage (24) agencés pour raccorder mutuellement ces supports au moyen d'un système de bielle de direction (22), caractérisé en ce que les moyens de montage (24) sont également agencés pour être susceptibles de raccorder individuellement chacun de ces supports (5) à un autre moyen de montage sur chacun des éléments latéraux (8) au moyen d'un tirant associé (23) de façon que le support ainsi raccordé (5) puisse se déplacer seulement dans un plan vertical, d'où il résulte que l'ensemble peut être monté sur une carrosserie d'un véhicule en tant que suspension, soit pour la paire de roues avant orientable, soit pour la paire de roues arrières.

2. Ensemble selon la revendication 1, caractérisé en ce que les moyens de montage associés au support (5) comportent un premier élément de montage (24) prévu sur chacun des supports et agencés pour être reliés mutuellement par le système de bielle de direction (22), cet autre moyen de montage comportant un élémemt d'articulation prévu sur chacun des éléments latéraux (8) et agencés pour être reliés au premier élément (24) du support associé (5) par le tirant associé (23).

3. Ensemble selon la revendication 1 ou la revendication 2, caractérisé en ce que les bras oscillants (9, 10) de chaque paire sont articulés sur les extrémités opposées de l'élément latéral associée (8) par des articulations (13, 14), chacune comportant une paire de douilles (20) et un manchon en un matériau élastiquement déformable du type élastomère lié aux surfaces de ces douilles.

4. Ensemble selon l'une des revendications précédentes, caractérisé en ce que les moyens élastiquement déformables (15) et les moyens d'amortissement (16) comportent une patte (19) se projetant de l'un (9) des bras oscillants (9, 10) de chaque paire, et une système (17, 18) comportant un ressort hélicoïdal (17) et un amortisseur (18) coaxial au ressort, et situé à l'intérieur de celui-ci, une extrémité de ce système étant articulée sur la patte tandis que l'autre extrémité du système est articulé sur l'élément central (7) de la travers (2), cette patte (19) étant formée et dimensionnée de telle sorte que l'axe du système forme un angle d'environ 45° avec l'axe de l'élément central.

Fig. 1

Fig. 2

Fig. 3

EP 0 217 261 B1